# EUROPÄISCHE PATENTANMELDUNG

(11) **EP 0 838 668 A2**
(43) Veröffentlichungstag der Anmeldung: **29.04.1998**
(21) Anmeldenummer: 97116452.0
(22) Anmeldetag: 22.09.1997
(51) Int. Cl.: G01F 23/38, G01F 23/76

(54) **Vorrichtung für die Niveaumessung in einem Behälter**

(30) Priorität: 24.10.1996 DE 19644203
(71) Anmelder: KSB Aktiengesellschaft, 67227 Frankenthal (DE)
(72) Erfinder: Heinrich, Hansjörg, 91257 Pegnitz (DE)

(57) **Zusammenfassung**

Die Erfindung betrifft eine Vorrichtung für die Niveaumessung in einem Behälter, mit einem innerhalb des Behälters angeordneten, mit einer Auslöseeinheit verbundenen Schwimmer und einer mit der Auslöseeinheit zusammenwirkenden Kontakteinheit, die jenseits einer nichtmagnetischen Wand angeordnet ist und die weitere Vorgänge, wie das Ein- und Ausschalten von Pumpen, das Ein- oder Ausschalten einer Alarmvorrichtung oder ähnliches einleitet.

Eine einfach zu montierende und zu justierende Vorrichtung, die in ihrer Gestaltung von der Art und Größe des Behälters unabhängig ist, wird dadurch geschaffen, daß die Auslöseeinheit (6, 12) in oder an einem Schwimmer (4) vorgesehen ist, der an der Behälterwand (2) schwenkbar derart angeordnet ist, daß sich die Auslöseeinheit (6, 12) bei abgesenktem Schwimmer (4) in der Nähe der Behälterwand (2) befindet und mit steigendem Flüssigkeitsstand von der Behälterwand (2) entfernt wird.

## Beschreibung

Die Erfindung betrifft eine Vorrichtung für die Niveaumessung in einem Behälter, mit einem innerhalb des Behälters angeordneten, mit einer Auslöseeinheit verbundenen Schwimmer und einer mit der Auslöseeinheit zusammenwirkenden Kontakteinheit, die jenseits einer nichtmagnetischen Wand angeordnet ist und die weitere Vorgänge, wie z.B. das Ein- und Ausschalten von Pumpen, einleitet.

Eine solche Vorrichtung ist bekannt durch die EP 0 050 063 B1. Dort ist ein an einer Stange befestigter Schwimmer über eine Achse mit einem Magneten verbunden, der bei einem in seine Höchstposition steigenden Schwimmer in eine Stellung gebracht wird, die einem jenseits einer Wand befindlichen weiteren Magneten genau gegenüberliegt. Hierdurch wird der hinter der Wand befindliche Magnet von dem mit dem Schwimmer verbundenen Magneten angezogen, wobei er einen mit ihm über ein Gestänge verbundenen Schalter betätigt. Mittels des Schalters wird eine Pumpe eingeschaltet, die die im Behälter befindliche Flüssigkeit nach außen fördert. Ein dritter, ebenfalls mit dem Schwimmer verbundener Magnet hält bei absinkendem Schwimmer den hinter der Wand befindlichen Magneten zunächst noch in der Einschaltposition, so daß die Pumpe noch bis zu einem vorgegebenen Mindest-Flüssigkeitsstand weiterfördert.

Die Abmessungen und der Anbringungsort der vorbekannten Vorrichtung werden durch den Behälter und die Betriebsbedingungen der jeweiligen Anlage bestimmt. Daraus ergibt sich, daß bei einer Vielzahl unterschiedlicher Anlagen auch eine Vielzahl unterschiedlicher Schwimmer eingesetzt werden müssen. Im übrigen müssen die Schaltstellungen der Schwimmer jeweils aufwendig justiert werden. Der Umstand, daß die mit dem Schwimmer verbundene Achse über eine Wand geführt wird, macht die Anbringung einer Dichtung notwendig und bringt damit eine mögliche Problemstelle mit sich. Betriebsprobleme können auch dadurch entstehen, daß der Schwimmer und dessen Achse konstruktionsbedingt sehr weit in den Behälter hineinragen.

Der Erfindung liegt die Aufgabe zugrunde, eine Vorrichtung zur Niveaumessung zu schaffen, die einen baugrößenunabhängigen Einsatz erlaubt und die schnell und leicht zu justieren ist.

Ausgehend von einer Vorrichtung der eingangs genannten Art wird diese Aufgabe erfindungsgemäß dadurch gelöst, daß die Auslöseeinheit in oder an einem Schwimmer vorgesehen ist, der an der Behälterwand schwenkbar derart angeordnet ist, daß sich die Auslöseeinheit bei abgesenktem Schwimmer in der Nähe der Behälterwand befindet und mit steigendem Flüssigkeitsstand von der Behälterwand entfernt wird.

Die erfindungsgemäße Vorrichtung besteht aus wenigen unkomplizierten Teilen. Ihr wenig Platz beanspruchender Schwimmer kann an der Innenwand des Behälters mit relativ einfachen Mitteln angebracht werden, beispielsweise durch Kleben oder durch eine einstückig mit der Behälterwand ausgeführte Halterung bei einem Spritzgußbehälter. Eine weitere Bearbeitung des Behälters kann also entfallen. Vor allem muß in der Behälterwand keine zusätzlich abzudichtende Öffnung angebracht werden.

Für die Gestaltung des Schwimmers und dessen Anbringung an der Behälterwand ergibt sich eine Reihe von Möglichkeiten. So kann der Schwimmer von der Achse eines an der Behälterwand befestigten Gelenks in der Art eines Scharniers getragen werden. Der Schwimmer kann aber auch von einem an der Behälterwand befestigten, aus flexiblem Material bestehenden Element getragen werden.

Als besonders vorteilhaft ist auch die Möglichkeit anzusehen, daß der Schwimmer an einer oder in einer zwischen dem Behälter und dessen Deckel eingeklemmten bandförmigen Halterung aus flexiblem Material angeordnet werden kann. Hieraus ergibt sich unter anderem die Möglichkeit einer schnellen und einfachen Nachrüstung bereits bestehender Anlagen, da für die Anbringung des innerhalb des Behälters befindlichen Teils des Vorrichtung keine weiteren Arbeiten notwendig sind. Bevorzugt wird eine Ausführung, bei der der Schwimmer in einem Folienschlauch angeordnet ist.

Die erfindungsgemäße Vorrichtung kann bei nichtmagnetischen Metallbehältern dadurch verwirklicht werden, daß die Auslöseeinheit von einem Magneten und die Kontakteinheit von einem Reedkontakt gebildet wird.

Bei Behältern aus einem nichtmetallischen Werkstoff kann die Auslöseeinheit aus einem leitfähigen Metall bestehen, während als Kontakteinheit ein induktiver oder ein kapazitiver Näherungschalter Verwendung findet.

Anhand mehrerer Ausführungsbeispiele wird die Erfindung näher erläutert. Es zeigt die
- Fig. 1: eine erfindungsgemäße Vorrichtung, deren Schwimmer an einem an einer Behälterwand befestigten Gelenk angeordnet ist, in
- Fig. 2: eine Variante der in der Fig. 1 dargestellten Vorrichtung, und in
- Fig. 3: eine weitere Variante der erfindungsgemäßen Vorrichtung, bei der der Schwimmer in einer zwischen dem Behälter und dessen Deckel eingeklemmten Folie angeordnet ist.

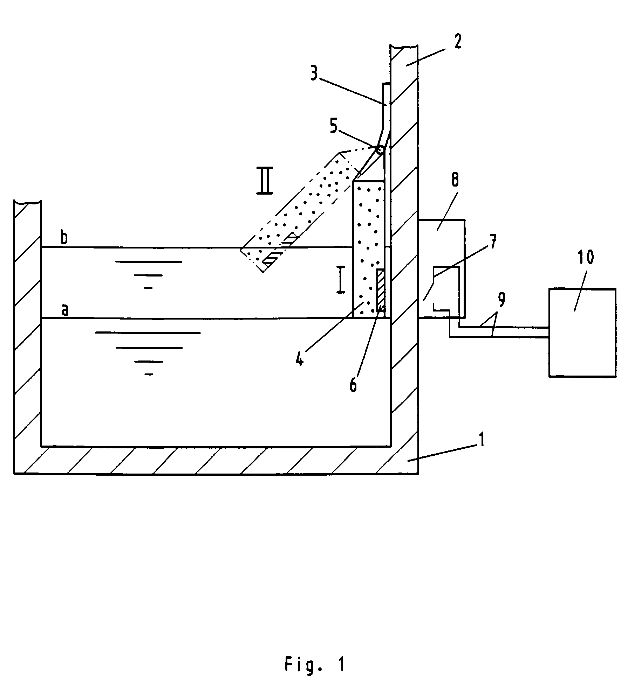

Der in der Fig. 1 dargestellte Behälter 1 besteht aus einem nichtmagnetischen Werkstoff. Im Inneren des Behälters 1 ist ein an der Behälterwand 2 befestigtes Gelenk 3 angeordnet. Im Ausführungsbeispiel ist das Gelenk 3 durch eine der geläufigen Verbindungsmethoden, wie z. B. Schweißen oder Kleben, an der Behälterwand 2 befestigt. Je nach Herstellungsmethode kann es aber auch zweckmäßig sein, das Gelenk 3 einstückig mit der Behälterwand 2 auszuführen.

Das Gelenk 3 trägt einen Schwimmer 4. Der Schwimmer 4, der um die Achse 5 des Gelenks 3 zu verschwenken ist, ist in zwei Positionen dargestellt: In der ersten, mit vollen Linien dargestellten abgesenkten Position I befindet sich der Schwimmer in der Nähe der Behälterwand 2. In der zweiten, mit gestrichelten Linien dargestellten Position II ist der Schwimmer 4 durch die im Behälter 1 angestiegene Flüssigkeit angehoben worden.

An seiner zur Behälterwand 2 gerichteten Seite trägt der Schwimmer 4 einen Magneten 6, der mit einem auf der Außenseite der Behälterwand 2 angeordneten Reedkontakt 7 einer Kontakteinheit 8 zusammenwirkt. Zur Übermittlung eines Steuersignals ist die Kontakteinheit 8 über Leitungen 9 mit einer - hier nur symbolisch dargestellten - der Entleerung des Behälters 1 dienenden Pumpe 10 und/oder einer Alarmeinheit verbunden.

Solange der Flüssigkeitsstand im Behälter 1 unterhalb des normalen Niveaus a verbleibt, bleibt auch der Schwimmer 4 in seiner abgesenkten Position I. Der Reedkontakt 7 der Kontakteinheit 8 bleibt geöffnet, die Pumpe 10 ist ausgeschaltet.

Bei ansteigendem Flüssigkeitsstand im Behälter 1 wird der Schwimmer 4 durch Schwenken um die Achse 5 des Gelenks 3 angehoben. Steigt nun der Flüssigkeitsstand im Behälter 1 auf das Auslöse- bzw. Alarmniveau b an und erreicht der Schwimmer 4 seine Position II, so wird aufgrund der nun gegebenen Entfernung zwischen dem Magneten 6 und der Kontakteinheit 8 der Reedkontakt 7 geschlossen und ein Steuersignal zum Einschalten der Pumpe 10 bzw. zur Alarmauslösung gegeben.

Bei abfallendem Flüssigkeitsstand im Behälter 1 bleibt zunächst der Reedkontakt 7 der Kontakteinheit 8 geschlossen. Die Pumpe 10 fördert solange, bis das von der Schalthysterese abhängige Normalniveau a erreicht ist. Der nun abgesenkte Schwimmer 4 bringt den Magneten 6 in die Nähe der Behälterwand 2, wodurch der Reedkontakt 7 öffnet und die Pumpe 10 abgeschaltet wird. Der Schwimmer 4 muß hierbei nicht vollständig abgesenkt sein, weil der Reedkontakt 7 bereits öffnet, wenn der Magnet 6 in seine Nähe kommt.

Bei nicht ausreichender Schalthysterese einer Vorrichtung oder bei mehreren Alarm- bzw. Schaltniveaus (z.B. Aus/ Pumpe 1/ Pumpe 2/ Alarm) können mehrere Vorrichtungen vorgesehen und schaltungstechnisch miteinander verknüpft werden.

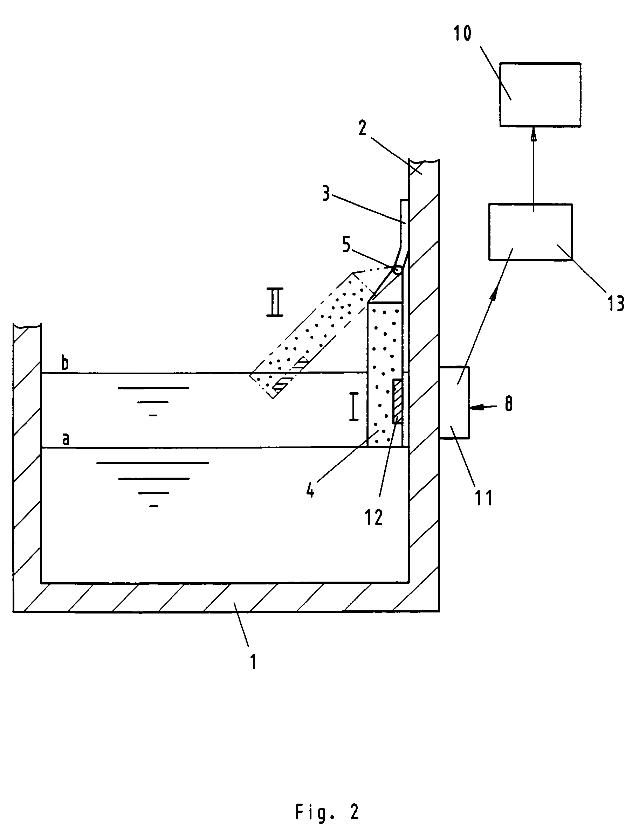

Die in der Fig. 2 dargestellte Ausführung unterscheidet sich von der Ausführung der Fig. 1 zunächst dadurch, daß in der Kontakteinheit 8 ein nach kapazitivem oder induktivem Verfahren arbeitender Näherungschalter 11 Verwendung findet. Bedingt durch die Art des Näherungschalters 11 muß der Behälter 1 aus einem nicht leitenden Werkstoff bestehen. Außerdem trägt der Schwimmer 4 keinen Magneten 6, sondern ein Plättchen 12 aus einem leitfähigen Metall.

Die Wirkungsweise der Vorrichtung der Fig. 2 ist jedoch grundsätzlich die gleiche wie bei der Ausführung der Fig. 1, mit dem Unterschied, daß von dem Näherungschalter 11 ein Meßsignal an eine Steuerung 13 und von dort ein Steuersignal an die Pumpe 10 bzw. einen Alarmgeber übermittelt wird.

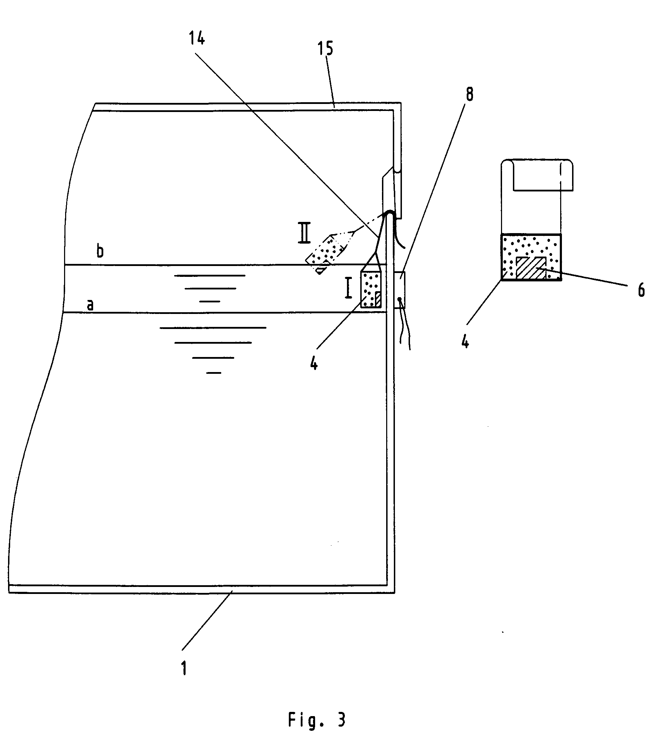

Auch die Ausführung der Fig. 3 entspricht in ihrer grundsätzlichen Wirkungsweise den Vorrichtungen der Fig. 1 und 2. Ein wesentlicher Unterschied zu diesen ist allerdings dadurch gegeben, daß die Ausführung der Fig. 3 keiner festen Installation ihres Schwimmers 4 innerhalb des Behälters 1 bedarf. Die Vorrichtung der Fig. 3 kann also auch bei bereits bestehenden Einrichtungen leicht nachgerüstet werden. Dies wird dadurch ermöglicht, daß der Schwimmer 4 in einem Folienschlauch 14 angeordnet ist, der zwischen dem Behälter 1 und dessen Deckel 15 so eingeklemmt wird, daß der Schwimmer 4 sich in seiner Position I, d. h. in abgesenktem Zustand, in der Höhe des Normalniveaus a befindet. Die Kontakteinheit 8 wird auf der Außenseite der Behälterwand 2 vorzugsweise durch Kleben befestigt.

## Patentansprüche

1. Vorrichtung für die Niveaumessung in einem Behälter, mit einem innerhalb des Behälters angeordneten, mit einer Auslöseeinheit verbundenen Schwimmer und einer mit der Auslöseeinheit zusammenwirkenden Kontakteinheit, die jenseits einer nichtmagnetischen Wand angeordnet ist und die weitere Vorgänge, wie das Ein- und Ausschalten von Pumpen, einleitet, **dadurch gekennzeichnet, daß** die Auslöseeinheit (6, 12) in oder an einem Schwimmer (4) vorgesehen ist, der an der Behälterwand (2) schwenkbar derart angeordnet ist, daß sich die Auslöseeinheit (6, 12) bei abgesenktem Schwimmer (4) in der Nähe der Behälterwand (2) befindet und mit steigendem Flüssigkeitsstand von der Behälterwand (2) entfernt wird.

2. Vorrichtung nach Anspruch 1, dadurch gekennzeichnet, daß der Schwimmer (4) von der Achse (5) eines an der Behälterwand (2) befestigten Gelenks (3) getragen wird.

3. Vorrichtung nach Anspruch 1, dadurch gekennzeichnet, daß der Schwimmer (4) von einem an der Behälterwand (2) befestigten, aus flexiblem Material bestehenden Element getragen wird.

4. Vorrichtung nach Anspruch 2 oder 3, dadurch gekennzeichnet, daß das den Schwimmer (4) tragende Element (3) mit der Behälterwand (2) verklebt ist.

5. Vorrichtung nach Anspruch 1, dadurch gekennzeichnet, daß der Schwimmer (4) durch eine einstückig mit der Behälterwand (2) ausgeführte Halterung getragen wird.

6. Vorrichtung nach Anspruch 1, dadurch gekennzeichnet, daß der Schwimmer (4) an oder in einer zwischen dem Behälter (1) und dessen Deckel (15) eingeklemmten bandförmigen Halterung aus flexiblem Material angeordnet ist.

7. Vorrichtung nach Anspruch 6, dadurch gekennzeichnet, daß der Schwimmer (4) in einem Folienschlauch (14) angeordnet ist.

8. Vorrichtung nach Anspruch 1, dadurch gekennzeichnet, daß die Auslöseeinheit von einem Magneten (6) und die Kontakteinheit (8) von einem Reedkontakt (7) gebildet wird.

9. Vorrichtung nach Anspruch 1, dadurch gekennzeichnet, daß die Auslöseeinheit aus einem leitfähigen Metall besteht, daß für die Kontakteinheit (8) ein induktiver oder kapazitiver Näherungsschalter (11) Verwendung findet und daß die Behälterwand (2) aus einem nichtmetallischen Werkstoff besteht.
